# EUROPÄISCHE PATENTSCHRIFT

(11) **EP 4 666 146 B1**
(45) Veröffentlichungstag und Bekanntmachung des Hinweises auf die Patenterteilung: **04.11.2026**
(21) Anmeldenummer: 24708115.1
(22) Anmeldetag: 16.02.2024
(51) Int. Cl.: G05D 16/00, G05D 16/06, F16K 11/087, F16K 11/00, F24D 19/10

(54) **REGELVENTIL ZUM SELEKTIVEN REGELN EINES FLUIDFLUSSES**
CONTROL VALVE FOR SELECTIVELY CONTROLLING A FLUID FLOW
SOUPAPE DE COMMANDE POUR COMMANDER SÉLECTIVEMENT UN ÉCOULEMENT DE FLUIDE

(30) Priorität: 16.02.2023 AT 501012023
(43) Veröffentlichungstag der Anmeldung: 24.12.2025
(73) Patentinhaber: Herz Armaturen Ges.m.b.H., 1230 Wien (AT)
(72) Erfinder: STEINER, JOHANN, 1230 wIEN (AT)
(74) Vertreter: Wildhack & Jellinek Patentanwälte GmbH
(86) Internationale Anmeldenummer: PCT/AT2024/060056
(87) Internationale Veröffentlichungsnummer: WO 2024/168373

(56) Entgegenhaltungen:
- EP-A1- 3 483 692
- WO-A1-2019/206510
- WO-A1-2023/117002
- CN-A- 112 361 030

## Beschreibung

Die vorliegende Erfindung betrifft ein Regelventil zum selektiven Regeln eines Fluidflusses zu einem Wärmetauscher gemäß dem Oberbegriff des Patentanspruchs 1.

Aus dem Stand der Technik sind diverse Kugelhähne bekannt, mit denen der Durchfluss eines Mediums, beispielsweise Heizungsmediums, Wasser oder anderer Medien, zu Heizkörpern oder anderen Verbrauchern geregelt werden. Derartige Kugelhähne haben beispielsweise einen oder mehrere Ausgänge, sodass der Fluss zu unterschiedlichen Ausgängen aus dem Ventil und/oder der Durchfluss durch das Ventil verändert werden kann. Bei den aus dem Stand der Technik bekannten Kugelhähnen wird dabei meist eine sogenannte Kugel verwendet, die Ausnehmungen aufweist und in dem Kugelhahn verdrehbar ist. Durch die Ausnehmungen der Kugel strömt sodann je nach Stellung der Kugel das Medium hindurch bzw. wird in die jeweiligen Ausgänge abgelenkt.

Bei sogenannten Regelhähnen ist es im Stand der Technik möglich, den Durchfluss je nach Stellung des Kugelhahns bzw. der Kugel in dem Ventil oder die Menge an Fluid, das durch den Kugelhahn durchtritt, einzustellen.

Aus dem Stand der Technik sind weiters 6-Wege-Kugelhähne bekannt, mit denen der Durchfluss, beispielweise eines Heizungsfluids zu einem Wärmetauscher, geregelt wird. An diesen 6-Wege-Kugelähnen sind beispielsweise an einem Eingang eine Kühlleitung und an dem anderen Eingang eine Heizleitung angeordnet, die dann je nach Stellung der Kugel den Wärmetauscher mit der jeweiligen Leitung verbindet und so ein warmes oder kaltes Medium dem Wärmetauscher zuführt. Von dem Wärmetauscher wird dann das erwärmte oder abgekühlte Medium zurück an den Kugelhahn geliefert und in einem sogenannten Rücklaufeinlass wieder über eine zweite Kugel, je nach deren Stellung, dem Kühlkreislauf oder Heizkreislauf zurückgeführt. Ein derartiger 6-Wege-Kugelhahn wird beispielsweise in der EP 3 483 692 A1 offenbart. Bei dem dort offenbarten 6-Wege-Kugelhahn wird die Kugel jeweils vollständig geöffnet oder geschlossen und derart der Durchfluss durch das Ventil hindurch zu einem Wärmetauscher freigegeben.

Nachteil der aus dem Stand der Technik bekannten Kugelhähne ist, dass diese einen komplexen Aufbau aufweisen oder unterschiedliche Kugelhähne mit je unterschiedlichen Stellantrieben benötigen, um den Durchfluss von Heizungs- und Kühlmedium zu einem Wärmetauscher in einer einzigen Vorrichtung zu ermöglichen. Weiters ist der Durchfluss der aus dem Stand der Technik bekannten 6-Wege-Kugelhähne durch die Kugel hindurch nicht einstellbar, da meist die Charakteristik der sogenannten Kugel bei Zwischenstellungen, beispielsweise teilweise geöffnetem oder geschlossenem Kugelhahn, undefinierte Druckverluste und ungewollte Durchflusscharakteristiken erzeugt.

Aufgabe der vorliegenden Erfindung ist es daher, einen 6-Wege-Kugelhahn bereitzustellen, mit dem der Durchfluss zu einem Wärmetauscher einfach eingestellt werden kann, ohne dass komplexe oder eine Vielzahl von Bauteilen benötigt werden.

Diese Aufgabe wird bei einem Regelventil gemäß dem Oberbegriff des Patentanspruchs 1 mit den kennzeichnenden Merkmalen gelöst. Erfindungsgemäß ist dabei vorgesehen, dass das Regelventil einen Differenzdruckregler umfasst, der in Strömungsrichtung nach dem Rückflusseinlass und vor dem Auslassauswahlelement angeordnet ist.

Durch die erfindungsgemäße Anordnung des Differenzdruckreglers im Rücklauf bzw. Rückfluss aus dem Wärmetauscher ist es möglich, eine einfache Druckdifferenz über das Regelventil einzustellen, wodurch in Kombination mit der Durchflussregelung über das Regelventil eine bevorzugte lineare, proportionale oder exponentielle Charakteristik des Druckverlusts bzw. des Differenzdrucks über den Durchfluss erzielt wird. So wird der Zu- und Abfluss von Heiz- oder Kühlmedium durch das Regelventil und den Wärmetauscher gleichmäßig ermöglicht und derart die Wärmemenge, die über den Wärmetauscher aufgenommen oder abgegeben wird, besonders einfach eingestellt werden. Ein weiterer Vorteil des erfindungsgemäßen 6-Wege-Kugelhahn liegt darin, dass der Differenzdruckregler und die regelnden Komponenten im Bereich von gemäßigten Temperaturen, also nach dem Wärmetauscher liegen, und daher geringeren thermischen Belastungen insbesondere im Heizbetrieb ausgesetzt sind. Dies schont insbesondere die Dichtungen und das die Werkstoffe des Differenzdruckreglers.

Besonders vorteilhafte Ausführungsformen des Regelventils werden durch die Merkmale der abhängigen Ansprüche näher definiert:
Eine besonders kompakte und einfach regelbare Ausführungsform des erfindungsgemäßen Regelventils wird bereitgestellt, indem das Einlassauswahlelement und das Auslassauswahlelement miteinander verbunden sind und gemeinsam durch einen Stellantrieb bewegbar, insbesondere verdrehbar, sind.

Um die jeweiligen Druckverhältnisse nach dem Auslassauswahlelement besonders einfach an den Differenzdruckregler weiterführen zu können, kann vorgesehen sein, dass das Regelventil eine erste Impulsleitung in Fluidverbindung mit dem ersten Rückflussauslass und einen zweiten Impulsleitung in Fluidverbindung mit dem zweiten Rückflussauslass aufweist,
wobei die erste Impulsleitung in Fluidverbindung mit dem Differenzdruckregler steht, wenn das dem Auslassauswahlelement den Rückflusseinlass mit dem ersten Rückflussauslass derart verbindet, dass ein konstanter Differenzdruck über das Auslassauswahlelement aufrechterhalten werden kann, und
die zweiten Impulsleitung in Fluidverbindung mit dem mit dem Differenzdruckregler steht, wenn das Auslassauswahlelement den Rückflusseinlass mit dem zweiten Rückflussauslass derart verbindet, dass ein konstanter Differenzdruck über das Auslassauswahlelement aufrechterhalten werden kann.

Vorteilhaft kann vorgesehen sein, dass das Regelventil ein Impulsauswahlelement und eine dritte Impulsleitung aufweist, wobei die dritte Impulsleitung in Fluidverbindung mit dem Impulsauswahlelement und dem Differenzdruckregler steht, wobei das Impulsauswahlelement zwischen einer ersten Position, die eine Fluidverbindung zwischen der erste Impulsleitung und der dritten Impulsleitung herstellt, und einer zweiten Position, die eine Fluidverbindung zwischen der zweiten Impulsleitung und der dritten Impulsleitung herstellt, bewegbar ist. Durch das Impulsauswahlelement ist es möglich, einfach die jeweilige Leitung, also beispielsweise die Kühl- oder Heizleitung, bedienen bzw. den darin vorliegenden Druck an den Differenzdruckregler einfach weiterleiten zu können. Weiters wird durch das erfindungsgemäße Impulsauswahlelement die jeweilige, nicht benötigte Impulsleitung verschlossen und derart mögliche störende Einflüsse auf den Differenzdruckregler vermieden.

Um das Impulsauswahlelement einfach mit dem Auslassauswahlelement verstellen zu können, kann vorgesehen sein, dass das Impulsauswahlelement und das Auslassauswahlelement so miteinanderverbunden sind, dass sich das Impulsauswahlelement und das Auslassauswahlelement übereinstimmend bewegen.

Eine besonders kompakte Bauform des Regelventils wird bereitgestellt, indem das Impulsauswahlelement im Wesentlichen als Scheibe oder Teller oder kreiselförmig ausgebildet ist und drehbar in einem im Wesentlichen zylindrischen Regelhohlraum des Regelventils angeordnet ist,
wobei die erste Impulsleitung, die zweite Impulsleitung und die dritte Impulsleitung mit dem zylindrischen Regelhohlraum an unterschiedlichen Positionen, insbesondere unterschiedlichen radialen Positionen des zylindrischen Regelhohlraums verbunden sind oder in diesen münden.

Die Impulsweiterleitung bzw. Druckweiterleitung durch das Impulsauswahlelement kann einfach bereitgestellt werden, indem das Impulsauswahlelement zumindest eine bogenförmige Impulsausnehmung aufweist, das sich über ein Kreissegment mit gleichem Radius des als Scheibe oder Teller oder kreiselförmig ausgebildeten Impulsauswahlelements erstreckt, wobei die Impulsausnehmung bei Drehung des Impulsauswahlelements entweder die erste Impulsleitung oder die zweite Impulsleitung in Fluidverbindung mit der dritten Impulsleitung bringt.

Um Beschädigungen, die häufig bei der Montage des Regelventils auftreten, besonders einfach vermeiden zu können, kann vorgesehen sein, dass die erste Impulsleitung und/oder die zweite Impulsleitung und/oder die dritte Impulsleitung im Gehäuse des Regelventils ausgebildet sind. Neben der Verhinderung der Beschädigungen an den Impulsleitungen bietet die Ausbildung innerhalb des Regelventils auch eine sehr kompakte Bauform, die darüber hinaus sehr langlebig und gegenüber Leckagen gut beständig ist.

Um die Durchflusscharakteristik durch das Regelventil vorteilhaft verändern zu können, kann vorgesehen sein, dass das Regelventil zumindest eine Blende aufweist, die im Strömungsweg, insbesondere im Übergangsbereich, zwischen dem Einlassauswahlelement und/oder dem Auslassauswahlelement und zumindest einer der Fluidleitungen des Regelventils angeordnet ist, wobei die Fluidleitungen jeweils von dem Einlassauswahlelement und/oder dem Auslassauswahlelement zu den einzelnen Einlässen oder Auslässen führen,
wobei die Blende eine Durchtrittsöffnung aufweist, mit der die Charakteristik des Fluidstroms, insbesondere der Volumenstrom, durch das Regelventil 10 modifizierbar ist, wobei die Durchtrittsöffnung derart ausgebildet ist, dass der Fluidstrom eine bevorzugt lineare Charakteristik des Durchflusses in Abhängigkeit vom Öffnungswinkel des Einlassauswahlelements und/oder des Auslassauswahlelement aufweist.

Eine vorteilhafte Ausführungsform sieht vor, dass das Regelventil zumindest eine Druckausgleichsbohrung aufweist, die den Regelhohlraum mit dem Innenraum des Gehäuses in dem das Auslassauswahlelement angeordnet ist verbindet, wobei das Impulsauswahlelement derart ausgebildet ist, dass ein Druckausgleich zwischen den Rücklaufauslässen über die erste Impulsleitung und/oder die zweite Impulsleitung, den Regelhohlraum und die Druckausgleichsbohrung zu dem Rücklaufeinlass erfolgen kann, wenn das Regelventil in der Absperrstellung ist in der der Durchfluss durch das Regelventil unterbunden ist. So kann einfach Druck aus den Leitungen oder Fluidleitungen abgeführt werden, der sich insbesondere bei der Absperrung des Regelventils und danach eintretender Temperaturänderung auf Grund der Umgebungstemperatur im Fluid aufbaut.

Besonders Vorteilhaft kann vorgesehen sein, dass das Impulsauswahlelement eine Anzahl von Entlastungsausnehmungen aufweist, wobei die Entlastungsausnehmungen derart in der Oberfläche des Impulsauswahlelements als Vertiefungen oder Kanäle für das Fluid ausgebildet sind, dass die erste Impulsleitung und/oder die zweite Impulsleitung über die Entlastungsausnehmungen mit den Druckausgleichsbohrung in verschiedenen Stellungen des Impulsauswahlelements druck- und/oder fluidübertragend verbindbar sind.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:
In Fig. 1 ist eine erste Ausführungsform des Regelventils in einer isometrischen Ansicht dargestellt,
Fig. 1a zeigt eine Draufsicht der Ausführungsform gemäß Fig. 1,
Fig. 2 zeigt eine Schnittansicht des Regelventils gemäß Fig. 1a entlang der Schnittlinien B-B entlang der Mittelachse des Rückflusseinlasses,
Fig. 3 zeigt eine Schnittansicht des Regelventils gemäß Fig. 1a entlang der Schnittachsen A-A entlang der Achsen der Einlässe und Auslässe,
Fig. 4 zeigt eine bevorzugte Ausführungsform des Regelventils mit einer Blende,
Fig. 5 zeigt eine Schnittansicht gemäß Fig. 3 entlang der Schnittachsen C-C in geöffneter Darstellung und
Fig. 6 zeigt eine Schnittansicht gemäß Fig. 5 mit geschlossenem Regelventil.
Fig. 7 bis 9 zeigt eine optionale Ausführungsform des erfindungsgemäßen Regelventils, die Fig. 10 bis 12 zeigen das Impulsauswahlelement der Ausführungsform gemäß der Fig. 7 und 8 in unterschiedlichen Ansichten,
Fig 13 a bis 13m zeigen das Impulsauswahlelement gemäß Fig. 7 bis 9 in unterschiedlichen Stellungen, und
Fig 14 bis 16 zeigen unterschiedliche Ansichten einer Blende.

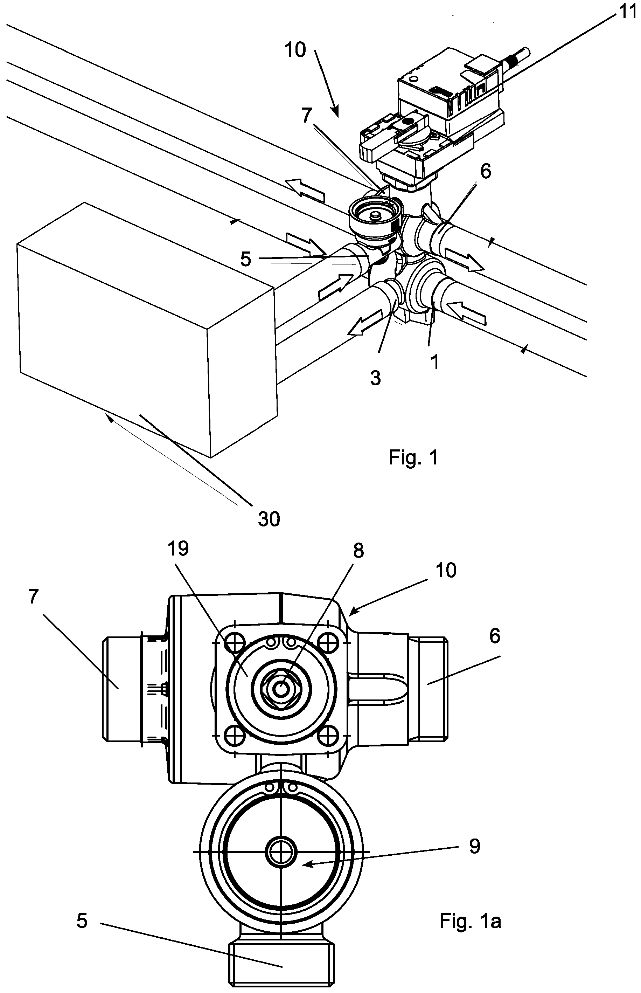

In Fig. 1 ist eine erste Ausführungsform des erfindungsgemäßen Regelventils 10 zum selektiven Regeln eines Fluidflusses zu einem Wärmetauscher 30 in einer isometrischen Ansicht dargestellt. Das Regelventil 10 ist als 6-Wege-Kugelhahn ausgebildet, weist also vorlaufseitig einen ersten Einlass 1 und einen zweiten Einlass 2 auf, über die jeweils Fluid aus einer ersten und zweiten Fluidquelle an das Regelventil 10 geleitet werden. Vorlaufseitig weist das Regelventil 10 weiters einen Auslass 3 auf, aus dem das Fluid zu einem Wärmetauscher 30 geleitet wird. Aus dem Wärmetauscher 30 führt dann eine Fluidleitung wieder zu dem Regelventil 10 und mündet rücklaufseitig über einen Rückflusseinlass 5 in das Regelventil 10. Aus dem Regelventil 10 tritt dann das Fluid je nach Einstellung aus dem ersten Rückflussauslass 6 oder dem zweiten Rückflussauslass 7 aus dem Regelventil 10 aus und wird über Fluidleitungen wieder der ersten oder zweiten Fluidquelle zugeführt. Die Fluidquelle kann dabei beispielsweise ein Warmwasserspeicher, ein Heizsystem, eine Wärmepumpe eine Klimagerät oder ein anderes System sein, in dem ein Fluid, wie z.B. ein Heiz- oder Kühlfluid temperiert, also erhitzt oder abgekühlt, wird.

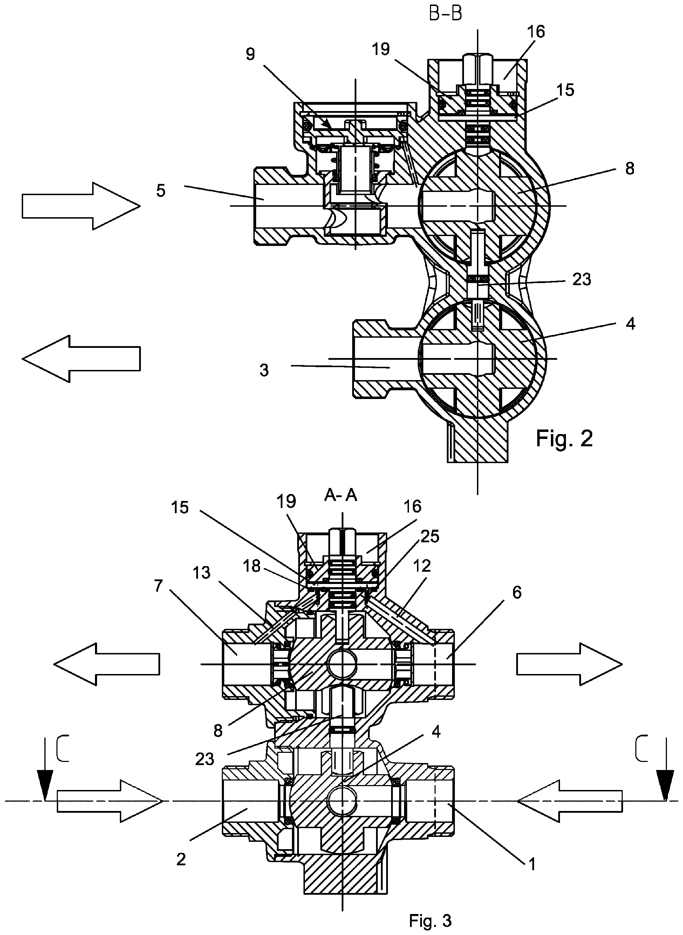

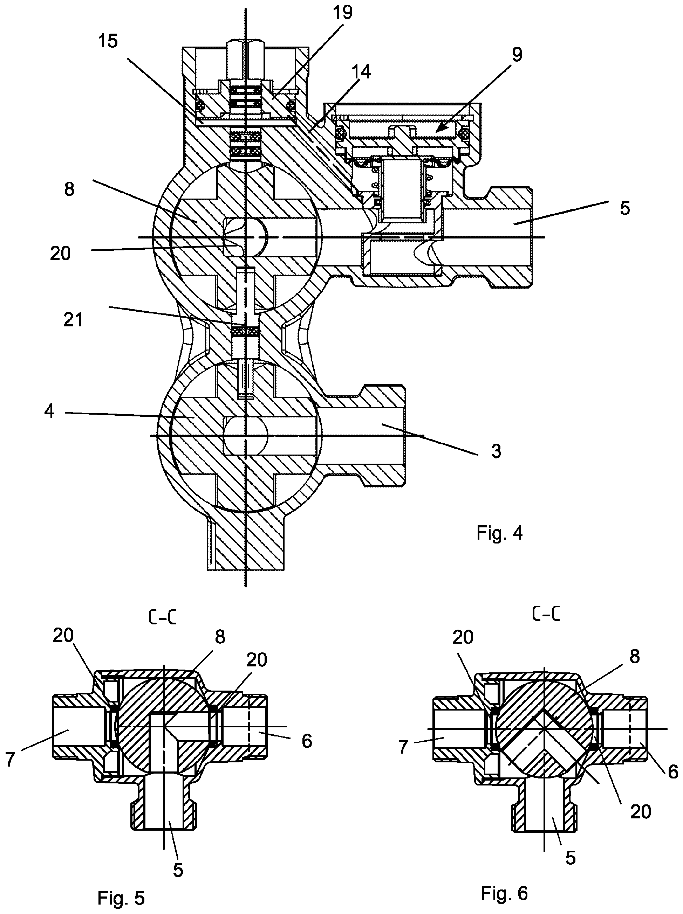

Das Regelventil 10 weist weiters ein Einlassauswahlelement 4 auf, das in Flussrichtung des Fluids, dargestellt durch die Pfeile in Fig. 1 bis 3, stromabwärts des ersten und des zweiten Einlasses 1,2 und stromaufwärts des Auslasses 3 angeordnet ist. (Fig. 2, Fig. 3) Mit dem Einlassauswahlelement 4, das bei der Ausführungsform der Fig. 1 als sogenannte Kugel ausgebildet ist, ist es möglich, dass der erste Einlass 1 in Fluidverbindung mit dem Auslass 3 gesetzt wird, indem das Einlassauswahlelement 4 in eine erste Position verdreht wird und über dieses der erste Einlass 1 mit dem Auslass 3 in Fluidverbindung steht. So kann beispielsweise ein über den ersten Einlass 1 in das Regelventil 10 eintretendes Heizungsfluid bzw. Heizmedium über das Regelventil 1 und den Auslass 3 dem Wärmetauscher 30 zugeführt werden. Wird das Einlassauswahlelement 4 bzw. die Kugel in eine zweite Position verdreht, verbindet diese den zweiten Einlass 2 mit dem Auslass 3 und sperrt die Fluidverbindung zwischen dem ersten Einlass 1 und dem Auslass 3. So kann beispielsweise am zweiten Einlass 2 ein Kühlmedium dem Regelventil 10 und über dieses am Auslass 3 über Fluidleitungen dem Wärmetauscher 30 zugeführt werden. So ist es möglich, mit dem Regelventil 10 sowohl ein Heizungsfluid als auch ein Kühlmedium mit einer einzigen Verbindung zwischen dem Wärmetauscher 30 und dem Regelventil 10 zuzuführen und so je nach Bedarf an Wärmeenergie bzw. Bedarf an Kühlenergie die Temperatur, beispielsweise eines Raumes, über den Wärmetauscher 30 zu regeln. Aus dem Wärmetauscher 30 strömt sodann das Heiz- bzw. Kühlfluid über den Rückflusseinlass 5 dem Regelventil 10 wieder zu und wird dort je nach Stellung eines Auslassauswahlelements 8 (Fig. 1a, Fig. 2, Fig. 3, Fig. 5, Fig. 6) entweder dem ersten Rückflussauslass 6 oder dem zweiten Rückflussauslass 7 zugeführt. Je nach Stellung des Auslassauswahlelements 8 wird also der Rückflusseinlass 5 mit dem ersten Rückflussauslass 6 (Fig. 5) verbunden und sperrt dabei den Fluidfluss zu dem zweiten Rückflussauslass 7, oder umgekehrt der Rückflusseinlass 5 ist mit dem zweiten Rückflussauslass 7 verbunden und der Durchfluss zum ersten Rückflussauslass 6 wird unterbrochen. So ist es möglich, je nach Stellung des Einlassauswahlelements 4 und des Auslassauswahlelements 8 wahlweise ein Heizungsfluid oder ein Kühlfluid oder -medium aus dem Wärmetauscher 30 über das Regelventil 10 abzuführen, ohne dass Fluidströme in die jeweils anderen Kreise geraten.

Der Wärmetauscher 30 kann erfindungsgemäß beispielsweise ein Heizkörper, ein Heiz- oder Kühlkonvektor oder eine Fußboden- oder Flächenheizung oder eine andere aus dem Stand der Technik bekannte Vorrichtungen sein, mit denen Gebäude, Räume oder andere Vorrichtungen erhitzt werden.

In Fig. 1a ist eine bevorzugte Ausführungsform des erfindungsgemäßen Regelventils 10 in einer Draufsicht, also von oben gesehen, dargestellt. Fig. 1a zeigt dabei die Ansicht auf die Rücklaufseite des Regelventils 10, also auf den Rückflusseinlass 5, den ersten Rückflussauslass 6 und den zweiten Rückflussauslass 7. Weiters ist der Befestigungsbereich des Auslassauswahlelements 8 gezeigt, an dem ein Stellantrieb 11, wie in Fig. 1 dargestellt, mit dem Regelventil 10 verbunden wird und mit diesem die Positionen des Auslassauswahlelements 8 eingestellt bzw. verstellt werden kann. Über den Stellantrieb 11 ist es weiters möglich, den Durchfluss über die jeweiligen Eingänge 1,2,5 und Ausgänge 3,6,7 bzw. die Einlässe 1,2, den Rückflusseinlass 5 zu den jeweiligen Auslässen, also dem Auslass 3 und den Rückflussauslässen 6,7 zu regeln. So wird durch den Stellantrieb 11 die Kugel bzw. das Auslassauswahlelement 8 und/oder das Einlassauswahlelement 4 in schrittweise geöffnet, beispielsweise lediglich ein Spalt für den Durchfluss des Fluids freigegeben und derart der Durchfluss bzw. Rückfluss zu bzw. von dem Wärmetauscher 30 geregelt bzw. je nach Stellung des Auslassauswahlelements 8 und/oder des Einlassauswahlelements 4 eingestellt. Bevorzugt wird die Durchflussregelung mit dem Auslassauswahlelement 8 geregelt, da derart der Druckverlust besonders einfach über einen Differenzdruckregler 9 geregelt werden kann.

Wie in der bevorzugten Ausführungsform der Fig. 1, Fig. 2 und Fig. 3 dargestellt, ist das Rückflussauswahlelement 8 mit dem Einlassauswahlelement 4 über einen Verbindungszapfen 23 verbunden, sodass diese gemeinsam über den Stellantrieb 11 verstellt werden. So ist es besonders einfach möglich, den jeweiligen Zu- und Rückfluss aus den einzelnen Fluidleitungen, also dem Heizkreislauf oder dem Kühlkreislauf, einzustellen, ohne dass ungewünschte Fluidflüsse in das jeweils andere System bzw. in den anderen Kreislauf erfolgen.

Wie in der Fig. 1a und den Schnittansichten Fig. 2 und Fig. 4 dargestellt, weist das Regelventil einen Differenzdruckregler 9 auf. Der Differenzdruckregler 9 ist erfindungsgemäß bei dem Regelventil 10 rücklaufseitig angeordnet und ist jeweils in Strömungsrichtung des Rücklaufs, also des aus dem Wärmetauscher 30 dem Regelventil 10 zuströmenden Fluids nach dem Rückflusseinlass 5 und vor dem Auslassauswahlelement 8 und damit dem ersten Rückflussauslass 6 und dem zweiten Rückflussauslass 7, angeordnet. Über den Differenzdruckregler 9 wird der Differenzdruck über das Regelventil 10 und im Besonderen über das Auslassauswahlelement 8 konstant gehalten, sodass negative Einflüsse im Heizkreislauf bzw. Kühlkreislauf verhindert werden. Der Differenzdruckregler 9 regelt also je nach Durchfluss durch das Regelventil 10 einen konstanten Differenzdruck über das Regelventil 10, sodass Druckschwankungen innerhalb der Fluidleitungen und damit dem Versorgungssystem bzw. den Fluidquellen durch den konstanten Differenzdruck vermieden werden. Über das Regelventil 10 ist es also möglich, eine definierte und gut einstellbare Wärme- bzw. Kühlleistung über den Wärmetauscher 30 einzustellen und derart besonders konstante und einfach bestimmbare und definierbare Wärme- und Kühlleistungen einem Raum, Gebäude oder anderen Vorrichtungen zuzuführen.

Wie in den Fig. 2, 3 und 6 dargestellt, weist das Regelventil 10 in einer optionalen Ausführungsform ein Impulsauswahlelement 15 auf. Über das Impulsauswahlelement 15 wird der Druck, der in den Rückflussauslässen 6,7 anliegt, an den Differenzdruckregler weitergeleitet und derart der Differenzdruck über das Regelventil 10 bzw. den Wärmetauscher 30 einfach geregelt. Das Regelventil 10 weist dazu optional eine erste Impulsleitung 12 auf, die in Fluidverbindung mit dem ersten Rückflussauslass 6 steht und den aktuellen Druck im Rückflussauslass 6 über die Impulsleitung 12 an das Impulsauswahlelement 15 überträgt. Weiters weist das Regelventil 10 eine zweite Impulsleitung 13 auf, die mit dem zweiten Rückflussauslass 7 verbunden ist und einen im Rückflussauslass 7 anstehenden Druck an das Impulsauswahlelement 15 überträgt. Zwischen dem Impulsauswahlelement 15 und dem Differenzdruckregler 9 ist eine dritte Impulsleitung 14 (Fig. 4) angeordnet, die das Impulsauswahlelement 15 mit dem Differenzdruckregler 9 verbindet, sodass der im Impulsauswahlelement 15 vorliegende Druck an den Differenzdruckregler 9 übertragen werden kann.

Das Impulsauswahlelement 15 ist in der bevorzugten Ausführungsform der Fig. 2, 3 und 4 als im Wesentlichen scheibenförmig oder tellerförmig oder kreiselförmig ausgebildetes Element ausgebildet. Das Impulsauswahlelement 15 ist in einem im Wesentlichen zylindrischen Regelhohlraum 16 des Regelventils 10 angeordnet. Die erste Impulsleitung 12, die zweite Impulsleitung 13 und die dritte Impulsleitung 14 sind dabei im Gehäuse des Regelventils 10 als Bohrungen bzw. Kanäle ausgeführt und münden bevorzugt in den zylindrischen Regelhohlraum 16 des Regelventils 10. Wie in der Fig. 3 dargestellt, ist beispielsweise die erste Impulsleitung 12 zwischen dem ersten Rückflussauslass 6 in dem Gehäuse des Regelventils 10 geführt und mündet schließlich in dem über den Auslassauswahlelement 8 angeordneten zylindrischen Regelhohlraum 16. Die zweite Impulsleitung 13 verbindet in gleicher Art den zweiten Rückflussauslass 7 über einen in dem Gehäuse des Regelventils 10 geführten Kanal und mündet an einer im Radius des zylindrischen Regelhohlraums gesehen der Mündung der ersten Impulsleitung 12 gegenüberliegenden Bereich in den zylindrischen Regelhohlraum 16. (Fig. 2) Die dritte Impulsleitung 14 ist, wie in Fig. 4 dargestellt, ebenfalls in einer bevorzugten Ausführungsform in dem Gehäuse des Regelventils 10 geführt und verbindet den zylindrischen Regelhohlraum 16 mit dem Differenzdruckregler 9. Die erste Impulsleitung 12, die zweite Impulsleitung 13 und die dritte Impulsleitung 14 sind dabei, in der Achse des zylindrischen Regelhohlraums 16 gesehen, im Gehäuse um 90° zueinander versetzt und erstrecken sich im Gehäuse des Regelventils 10 in der Achse der jeweiligen Auslässe bzw. Einlässe. Die erste Impulsleitung 12 ist also schräg in dem Gehäuse des Regelventils 10 von dem ersten Rückflussauslass 6 zum zylindrischen Regelhohlraum 16, der sich in der Drehachse des Auslassauswahlelements 8 befindet, geführt, wobei die zweite Impulsleitung 13 jeweils in Bezug auf die Achse des Auslassauswahlelements 8 um 180° zur ersten Impulsleitung 12 angeordnet ist und in der Achse des zweiten Rückflussauslasses 7 schräg nach oben zum zylindrischen Regelhohlraum 16 in dem Gehäuse geführt ist (Fig. 3). Die erste Impulsleitung 12 und die zweite Impulsleitung 13 münden in den Boden des Regelhohlraums 16 jeweils in etwa auf halbem Radius des Radius des Regelhohlraums 16. Die dritte Impulsleitung 14 ist, wie in Fig. 4 dargestellt, gerade ausgebildet und führt schräg vom Hohlraum des Differenzdruckreglers 9 in der Achse des Rückflusseinlasses 5 nach oben in den Regelhohlraum 16 und mündet im Bereich der Kante des Bodens des Regelholraums 16 in diesen.

Das Impulsauswahlelement 15 ist im Wesentlichen als Scheibe oder Teller ausgebildetes Element in dem zylindrischen Regelhohlraum 16 angeordnet und in diesem in seiner Achse verdrehbar. Gegenüber der Umgebung ist der Regelhohlraum 16 durch ein Verschlusselement 19 mit Dichtungen abgedichtet bzw. verschlossen. Das Impulsauswahlelement 15 weist an dessen dem Auslassauswahlelement 8 zugewandten Unterseite eine Anzahl von bogenförmigen Impulsausnehmungen 17 auf, die sich über einen Radiusabschnitt des Impulsauswahlelements 15 erstrecken. Das Impulsauswahlelement 15 liegt dabei in einem geringen Abstand auf dem Gehäuse bzw. der Unterseite des zylindrischen Regelhohlraums 16 auf Dichtungen 18, die um die Mündung der ersten Impulsleitung 12 und der zweiten Impulsleitung 13, herum angeordnet sind an und deckt jeweils die Öffnungen der ersten Impulsleitung 12 und der zweiten Impulsleitung 13 ab, sodass der Durchfluss aus der ersten Impulsleitung 12 und der zweiten Impulsleitung 13 in den Regelhohlraum 16 durch die Dichtungen 18 unterbunden ist. Über die bogenförmigen Impulsausnehmungen 17 wird sodann je nach Stellung des Impulsauswahlelements 15 innerhalb des Regelhohlraums 16 entweder die erste Impulsleitung 12 mit der dritten Impulsleitung 14 oder die zweite Impulsleitung 13 mit der dritten Impulsleitung 14 verbunden, sodass der jeweilige Druckimpuls bzw. an den jeweiligen Ausgängen anliegende Druck über die Impulsleitungen 12,13,14 an den Differenzdruckregler 9 übertragen wird.

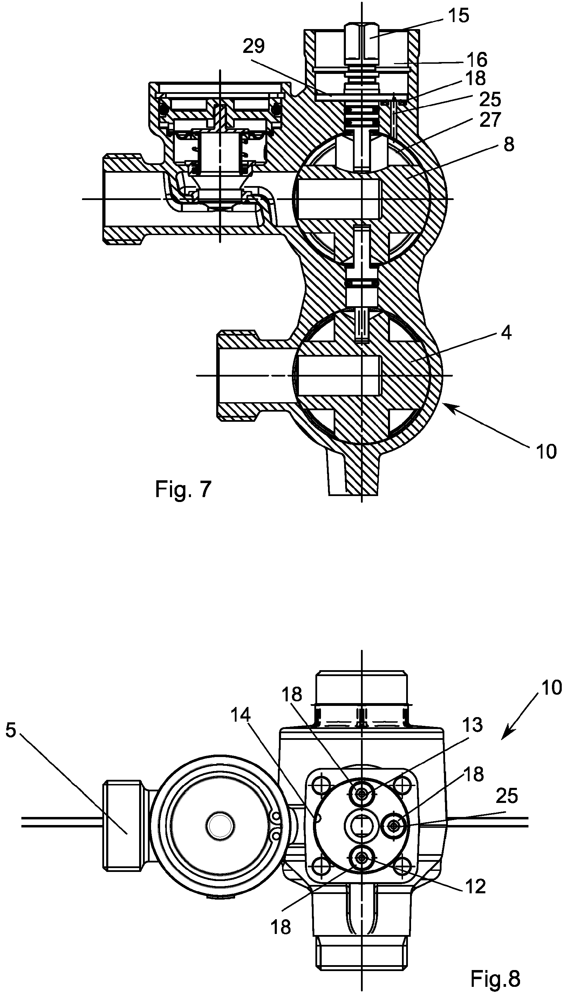

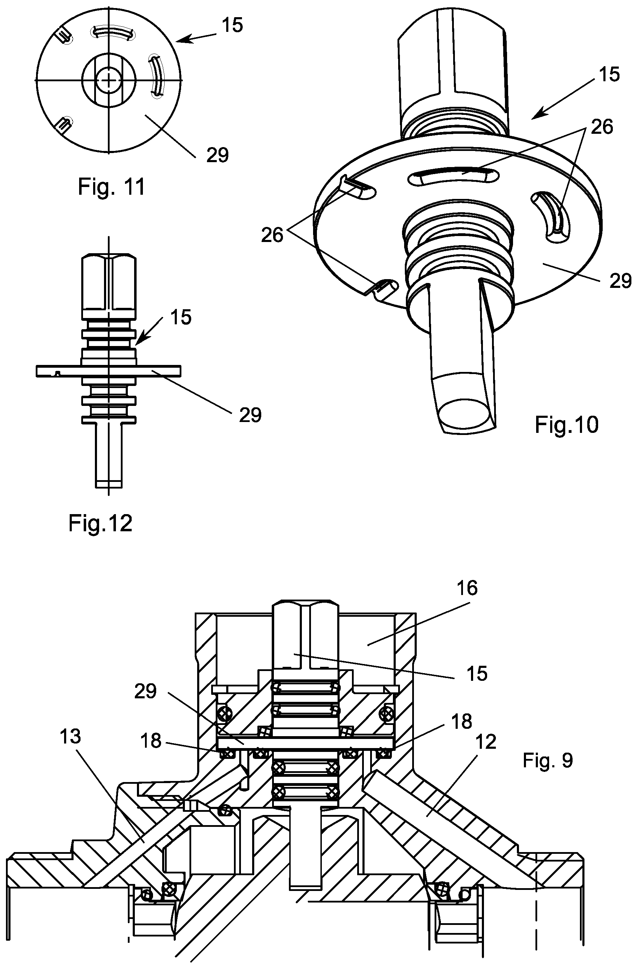

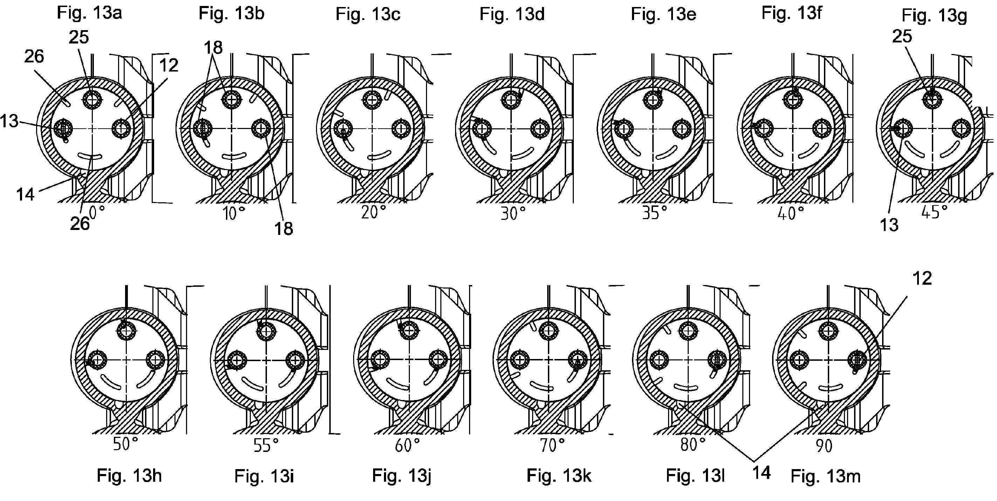

In den Fig. 7 bis 9 ist eine optionale Ausführungsform des erfindungsgemäßen Regelventils 10 dargestellt. Das Regelventil 10 weist eine Druckausgleichsbohrung 25 auf, die den Regelhohlraum 16 mit dem Innenraum 27 des Gehäuses, in dem das Auslassauswahlelement 8 angeordnet ist, verbindet. Die Druckausgleichsbohrung 25 erstreckt sich vom Boden des Regelhohlraums 16 in das Gehäuse bis in die kugelförmige Ausnehmung bzw. den Innenraum 27 des Gehäuses, in der das als Kugel ausgebildete Auslassauswahlelement 8 angeordnet und gelagert ist. Die Druckausgleichsbohrung 25 verbindet somit den Regelhohlraum 16 mit dem Innenraum 27 des Gehäuses, sodass ein Druckausgleich und ein Transport von Fluid über die Druckausgleichsbohrung 25 aus dem Regelhohlraum 16 möglich ist. Je nach Verdrehung bzw. Stellung des Impulsauswahlelements 15 (Fig13a bis 13m) kann der Regelhohlraum 16 bzw. die Druckausgleichsbohrung 25 mit einer der Impulsleitungen 12,13,14 verbunden. So wird der Rückflussauslass 6,7 und/oder der Rückflusseinlass 5 mit der Druckentlastungsbohrung 25 verbunden und Druck aus den jeweiligen Impulsleitungen 12,13,14 (Fig. 8,9) kann abgebaut werden. Über den Innenraum 27 des Gehäuses kann dann der Druck bzw. das Fluid in die Fluidleitungen abgeleitet werden. Dies ist besonders von Vorteil, wenn der Kugelhahn bzw. das Regelventil 10 geschlossen ist und noch temperiertes Medium in den Fluidleitungen vorliegt. So kann beispielsweise bei Vorliegen von kaltem Kühlmedium, das beispielsweise 10°C hat, dieses durch den unterbrochenen Fluidfluss aus der Umgebung Wärme aufnehmen, sich erwärmen und sich daher ausdehnen oder Druck aufbauen. Würde der durch die Erwärmung steigende Druck nicht abgebaut, könnte dies zu Beschädigungen der Fluidleitungen oder von Bauteilen des Regelventils 10 oder des Wärmetauschers oder sogar zu Leckagen führen.

Die Fig. 10 bis 12 zeigen Detailansichten des Impulsauswahlelements 15 der Ausführungsform gemäß Fig. 7 bis 9. Das Impulsauswahlelement 15 weist eine Regelscheibe 29 auf, die innerhalb des Regelhohlraums 16 angeordnet ist und die Öffnungen der Impulsleitungen 12,13 und der Druckausgleichsbohrung 25 mit deren Dichtungen 18 abdeckt und so abdichtet. In der Regelscheibe 29 sind vier Entlastungsausnehmungen 26 in der dem Boden des Regelholraums 16 zugewandten Seite als Vertiefungen bzw. Kanäle ausgebildet. Die Entlastungsausnehmungen 26 erstrecken sich dabei über unterschiedliche Abschnitte des Impulsauswahlelements 15 bzw. der Regelscheibe 29. Zwei der Entlastungsausnehmungen 26 erstrecken sich jeweils über einen Kreisbogen mit gleichem Radius und zwei Entlastungsausnehmungen 26 sind radial nach Außen im Randbereich der Regelscheibe 29 angeordnet. Wie in Fig. 12 gezeigt ist das Impulsauswahlelement 15 bzw. mit dem Auslassauswahlelement 8 verbunden und wird mit diesem gemeinsam, also in demselben Winkel, über einen nicht dargestellten Stellantrieb verstellt bzw. verdreht.

Die Fig. 13a bis 13m zeigen unterschiedliche Stellungen des Impulsauswahlelements 15 bzw. der Regelscheibe 29. Die Regelscheibe 29 liegt auf den, um die erste Impulsleitung 12, die zweite Impulsleitung 13 und die Druckausgleichsbohrung 25 angeordneten, Dichtungen 18 auf und bildet einen kleinen Spalt zwischen sich und dem Boden des Regelhohlraums 16 aus. Über den Spalt kann, je nach Stellung des Impulsauswahlelements 15, der Druck bzw. das Fluid in die Impulsleitungen 12,13,14 oder die Druckausgleichsbohrung 25 verteilt bzw. geleitet werden. So ist in der Stellung 0° bis ca. 30° (Fig.13a bis 13e) der Stellung des Impulsauswahlelements 15 der Durchfluss vom Rückflusseinlass 5 zum zweiten Rückflussauslass 7 von 0° voll geöffnet bis ca. 30° teilweise geschlossen bis 45° (Fig. 13g) voll geschlossen. Während der Durchfluss vom Rückflusseinlass 5 zum zweiten Rückflussauslass 7 geöffnet bzw. teilweise geöffnet ist, wird auch über die erste kreissegmentförmige Entlastungsausnehmungen 26 Druck aus der zweiten Impulsleitung 13, über die Dichtung 18 hinweg, in den Spalt zwischen Regelscheibe 29 und Boden der Regelausnehmung 16 geleitet und so über die Impulsleitung 14 an den Differenzdruckregler 9 weitergeleitet bzw. übertragen (Fig. 13a bis 13d).

Ist der Durchfluss zwischen Rückflusseinlass 5 und zweitem Rückflussauslass 7 geschlossen (Fig. 13g) verbinden die zwei, im Randbereich der Regelscheibe 29 angeordneten, Entlastungsausnehmungen 26 die Druckentlastungsbohrung 25 und die zweite Impulsleitung 13 mit dem Spalt zwischen Regelscheibe 29 und Boden der Regelausnehmung 16, über die Dichtungen 18 hinweg. So kann ein etwaiger durch Temperaturänderung entstehender Druck aus dem Rücklaufauslass 7 über die Druckausgleichsbohrung 25 abgeleitet bzw. ausgeglichen werden. Dies ist besonders von Vorteil, wenn der Rückflussauslass 7 mit den Kühlmediumsleitungen bzw. der Kühlmediumsquelle verbunden ist und Druckanstiege bei erhitzen des Kühlmediums in Richtung der Raumtemperatur entstehen.

Wird das Impulsauswahlelement 15 in Richtung der Stellung verdreht, in der der Durchfluss zwischen Rücklaufeinlass 5 und dem ersten Rücklaufauslass 6 hergestellt wird (Fig. 13j bis Fig. 13m), wird eine der kreissegmentförmigen Entlastungsausnehmungen 26 mit der ersten Impulsleitung 12 verbunden, sodass der Druck und Fluid über die erste Impulsleitung 12 und dem Spalt zwischen Regelscheibe 29 und Boden des Regelholraums 16 über die Dichtung 18 hinweg geleitet wird und dann in die dritte Impulsleitung 14 dem Differenzdruckregler 9 zugeführt wird. Analog zu der Druckentlastung über die zweite Impulsleitung 13 kann optional ebenfalls über weitere Druckentlastungsausnehmungen 26 auch in der geschlossenen Stellung ein Druckausgleich aus der ersten Rücklaufleistung über die Druckentlastungsbohrung bewirkt werden.

Durch die Regelscheibe 29, die Dichtungen 18, die Entlastungsausnehmungen 26 kann so durch die Verdrehung des Impulsauswahlelements 15 einfach die Drücke, die in den Rücklaufauslässen 6,7 anliegen an den Differenzdruckregler 9 weitergeleitet werden und andererseits in der Absperrstellung etwaig entstehender Druck abgebaut werden.

Wie in Fig. 4 dargestellt, kann in einer optionalen Ausführungsform des erfindungsgemäßen Regelventils das Regelventil eine Anzahl von Blenden 20 aufweisen, die im Strömungsweg zwischen dem Auslassauswahlelement 8 und den Auslässen 3,6,7 angeordnet ist. So kann, wie in Fig. 4 dargestellt, beispielsweise im Übergangsbereich zwischen dem Auslassauswahlelement 8 und der Fluidleitung, die zu dem zweiten Rückflussauslass 7 führt, die Blende 20 positioniert bzw. angeordnet sein. Die Blende 20 weist dabei eine Drucktrittsöffnung 22 auf, mit der die Charakteristik des durch die Blende 20 durchtretenden Fluidstroms zu dem zweiten Rückflussauslass 7 verändert wird, sodass diese eine lineare Charakteristik des Durchflusses in Abhängigkeit vom Öffnungswinkel des Auslassauswahlelements 8 aufweist. Insbesondere in Kombination mit dem Differenzdruckregler 9, wird derart eine vorteilhafte Änderung des Durchflusses über das Regelventil 10 erreicht.

Optional, in nicht dargestellten Ausführungsformen, ist es möglich, dass eine Vielzahl von Blenden 20 jeweils in den Übergangsbereichen bzw. den Fluidleitungen zu den jeweiligen Einlässen 1,2,5 oder Auslässen 3,6,7 angeordnet sind und derart die Strömungscharakteristik bzw. den Durchfluss über die Durchtrittsöffnung 22 der Blende 20 modifizieren, sodass der Durchfluss in die jeweiligen Einlässe 1,2,5 oder Auslässe 3,6,7 eine lineare Charakteristik in Abhängigkeit vom Öffnungswinkel des jeweiligen Einlassauswahlelements 4 und/oder des Auslassauswahlelements 8 aufweist. So kann beispielsweise jeweils eine Blende 20 im Bereich des Einlassauswahlelements 4 zum zweiten Einlass 2, zum ersten Einlass 1 und dem Auslass 3 angeordnet sein und gleichzeitig auch eine Blende 20 im Übergangsbereich des Auslassauswahlelements 8 zu dem jeweiligen ersten Rückflussauslass 6, dem zweiten Rückflussauslass 7 und dem Rückflusseinlass 5 jeweils angeordnet sein.

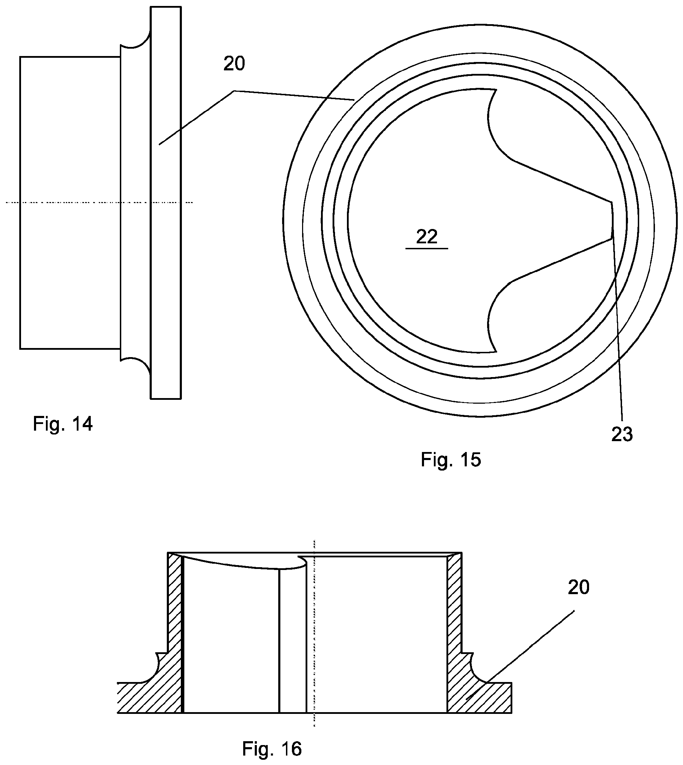

Eine bevorzugte Ausbildung der Blenden 20 ist in den Fig. 14 bis 16 dargestellt. Die Blende weist eine Durchtrittsöffnung 22 auf. Die Durchtrittsöffnung 22 weist ein in etwa T-Förmige Ausbildung auf, die jeweils abgerundet ausgebildet ist. Die Durchtrittsöffnung 22 erweitert sich also ausgehend von der kurzen Kante 23, in Fig. 15 rechts angeordnet, kegelförmig und ist in der zweiten Hälfte halbkreisförmig ausgebildet, sodass eine größere Durchtrittsfläche ausgehend von der kleinen Kante 23 erreicht wird. Die Blende 20 ist dabei in den Auslässen 3,6,7 und oder Einlässen 1,2,5 so angeordnet, dass jeweils ausgehend von der kurzen Kante 23 bei Verstellung des Einlassauswahlelements 4 bzw. des Auslassauswahlelements 8 ein kleiner Teil der Durchtrittsöffnung zu den jeweiligen Auslässen 3,6,7 bzw. Einlässen 1,2,5 freigegeben wird und die Durchtrittsfläche sich dann bei weiterer Verstellung des Einlassauswahlelements 4 bzw. des Auslassauswahlelements 8 stark erweitert. So wird erreicht, dass der Durchfluss bei kleinen Mengen des Heiz- bzw. Kühlfluids, das durch das Regelventil 10 durchtreten soll, genauer geregelt werden kann und so feine Temperaturunterscheide im Wärmetauscher erzeugt werden können. Die Änderungen der Durchtrittsmenge durch das Regelventil 10 können daher besonders präzise Änderungen der Wärmemengen bzw. Temperaturänderungen in den jeweiligen Wärmetauschern erreichen. Dies ist zu Beginn eines Heiz- bzw. Kühlvorgangs oder in kleinen Räumen vorteilhaft da bereits geringe Änderungen des zugeführten Mediums bereits größere Unterschiede bewirken können und derart eine größere Spreizung erreicht werden kann.

## Patentansprüche

1. Regelventil (10) zum selektiven Regeln eines Fluidflusses zu einem Wärmetauscher (30), insbesondere einem Heizkörper, einem Heiz- oder Kühlkonvektor oder einer Fußboden- oder Flächenheizung, wobei das Regelventil (10) als 6-Wege-Kugelhahn ausgebildet ist, umfassend:
- einen ersten Einlass (1), der dazu eingerichtet ist, mit einer ersten Fluidquelle verbunden zu werden;
- einen zweiten Einlass (2), der dazu eingerichtet ist, mit einer zweiten Fluidquelle verbunden zu werden;
- einen Auslass (3), der dazu eingerichtet ist, mit dem Wärmetauscher (30) verbunden zu werden;
- ein Einlassauswahlelement (4), das stromabwärts des ersten und des zweiten Einlasses (1,2) und stromaufwärts des Auslasses (3) angeordnet ist, wobei das Einlassauswahlelement (4) zwischen einer ersten Position, in der der erste Einlass (1) in Fluidverbindung mit dem Auslass (3) steht, und einer zweiten Position, in der der zweite Einlass (2) in Fluidverbindung mit dem Auslass (3) steht, bewegbar ist;
- einen Rückflusseinlass (5), der dazu eingerichtet ist, mit dem Wärmetauscher (30) verbunden zu werden, um ein aus dem Wärmetauscher (30) zurückfließendes Fluid zu empfangen;
- einen ersten Rückflussauslass (6), der dazu eingerichtet ist, mit einem ersten Fluidabfluss verbunden zu werden;
- einen zweiten Rückflussauslass (7), der dazu eingerichtet ist, mit einem zweiten Fluidabfluss verbunden zu werden; und
- ein Auslassauswahlelement (8), das stromabwärts des Rückflusseinlasses (5) und stromaufwärts des ersten und des zweiten Rückflussauslasses (6,7) und angeordnet ist, wobei das Auslassauswahlelement (8) zwischen einer ersten Position, in der der erste Rückflussauslass (6) in Fluidverbindung mit dem Rückflusseinlass (5) steht, und einer zweiten Position, in der der zweite Rückflussauslass (7) in Fluidverbindung mit dem Rückflusseinlass (5) steht, bewegbar ist,
- wobei das Einlassauswahlelement (4) und/oder das Auslassauswahlelement (8) derart ausgebildet sind, dass der Durchfluss durch das Regelventil (10) zu dem Auslass (3) und/oder den Rückflussauslässen (6,7) regelbar ist,
**dadurch gekennzeichnet, dass**
das Regelventil (10) einen Differenzdruckregler (9) umfasst, der in Strömungsrichtung nach dem Rückflusseinlass (5) und vor dem Auslassauswahlelement (8) angeordnet ist.

2. Regelventil (10) nach Anspruch 1, **dadurch gekennzeichnet, dass** das Einlassauswahlelement (4) und das Auslassauswahlelement (8) miteinander verbunden sind und gemeinsam durch einen Stellantrieb (11) bewegbar, insbesondere verdrehbar, sind.

3. Regelventil (10) nach einem der vorangehenden Ansprüche, **dadurch gekennzeichnet, dass** das Regelventil (10) eine erste Impulsleitung (12) in Fluidverbindung mit dem ersten Rückflussauslass (6) und einen zweiten Impulsleitung (13) in Fluidverbindung mit dem zweiten Rückflussauslass (7) aufweist,
wobei die erste Impulsleitung (12) in Fluidverbindung mit dem Differenzdruckregler (9) steht, wenn das dem Auslassauswahlelement (8) den Rückflusseinlass (5) mit dem ersten Rückflussauslass (6) derart verbindet, dass ein konstanter Differenzdruck über das Auslassauswahlelement (8) aufrechterhalten werden kann, und
die zweiten Impulsleitung (13) in Fluidverbindung mit dem mit dem Differenzdruckregler (9) steht, wenn das Auslassauswahlelement (8) den Rückflusseinlass (5) mit dem zweiten Rückflussauslass (7) derart verbindet, dass ein konstanter Differenzdruck über das Auslassauswahlelement (8) aufrechterhalten werden kann.

4. Regelventil (10) nach Anspruch 3, **dadurch gekennzeichnet, dass** das Regelventil (10) ein Impulsauswahlelement (15) und eine dritte Impulsleitung (14) aufweist, wobei die dritte Impulsleitung in Fluidverbindung mit dem Impulsauswahlelement (14) und dem Differenzdruckregler (9) steht,
wobei das Impulsauswahlelement (15) zwischen einer ersten Position, die eine Fluidverbindung zwischen der erste Impulsleitung (12) und der dritten Impulsleitung (14) herstellt, und einer zweiten Position, die eine Fluidverbindung zwischen der zweiten Impulsleitung (13) und der dritten Impulsleitung (14) herstellt, bewegbar ist.

5. Regelventil (10) nach Anspruch 4, **dadurch gekennzeichnet, dass** das Impulsauswahlelement (15) und das Auslassauswahlelement (8) so miteinanderverbunden sind, dass sich das Impulsauswahlelement (15) und das Auslassauswahlelement (8) übereinstimmend bewegen.

6. Regelventil (10) nach Anspruch 5, **dadurch gekennzeichnet, dass** das Impulsauswahlelement (15) im Wesentlichen als Scheibe oder Teller oder kreiselförmig ausgebildet ist und drehbar in einem im Wesentlichen zylindrischen Regelhohlraum (16) des Regelventils (10) angeordnet ist,
wobei die erste Impulsleitung (12), die zweite Impulsleitung (13) und die dritte Impulsleitung (14) mit dem zylindrischen Regelhohlraum (16) an unterschiedlichen Positionen, insbesondere unterschiedlichen radialen Positionen des zylindrischen Regelhohlraums (16) verbunden sind oder in diesen münden.

7. Regelventil (10) nach Anspruch 6, **dadurch gekennzeichnet, dass** das Impulsauswahlelement (15) zumindest eine bogenförmige Impulsausnehmung (17) aufweist, das sich über ein Kreissegment mit gleichem Radius des als Scheibe oder Teller oder kreiselförmig ausgebildeten Impulsauswahlelements (15) erstreckt, wobei die Impulsausnehmung (17) bei Drehung des Impulsauswahlelements (15) entweder die erste Impulsleitung (12) oder die zweite Impulsleitung (13) in Fluidverbindung mit der dritten Impulsleitung (14) bringt.

8. Regelventil (10) nach einem der vorangehenden Ansprüche, **dadurch gekennzeichnet, dass** die erste Impulsleitung (12) und/oder die zweite Impulsleitung (13) und/oder die dritte Impulsleitung (14) im Gehäuse des Regelventils (10) ausgebildet sind.

9. Regelventil (10) nach einem der vorangehenden Ansprüche, **dadurch gekennzeichnet, dass** das Regelventil (10) zumindest eine Blende (20) aufweist, die im Strömungsweg, insbesondere im Übergangsbereich, zwischen dem Einlassauswahlelement (4) und/oder dem Auslassauswahlelement (8) und zumindest einer der Fluidleitungen des Regelventils (10) angeordnet ist, wobei die Fluidleitungen jeweils von dem Einlassauswahlelement (4) und/oder dem Auslassauswahlelement (8) zu den einzelnen Einlässen (1,2,5) oder Auslässen (3,6,7) führen,
wobei die Blende (20) eine Durchtrittsöffnung (22) aufweist, mit der die Charakteristik des Fluidstroms, insbesondere der Volumenstrom, durch das Regelventil 10 modifizierbar ist, wobei die Durchtrittsöffnung (22) derart ausgebildet ist, dass der Fluidstrom eine bevorzugt lineare Charakteristik des Durchflusses in Abhängigkeit vom Öffnungswinkel des Einlassauswahlelements (4) und/oder des Auslassauswahlelement (8) aufweist.

10. Regelventil (10) nach einem der vorangehenden Ansprüche, **dadurch gekennzeichnet, dass** das Regelventil (10) zumindest eine Druckausgleichsbohrung (25) aufweist, die den Regelhohlraum (16) mit dem Innenraum (27) des Gehäuses in dem das Auslassauswahlelement (8) angeordnet ist verbindet, wobei das Impulsauswahlelement (15) derart ausgebildet ist, dass ein Druckausgleich zwischen den Rücklaufauslässen (6,7) über die erste Impulsleitung (12) und/oder die zweite Impulsleitung (13), den Regelhohlraum (16) und die Druckausgleichsbohrung (25) zu dem Rücklaufeinlass (5) erfolgen kann, wenn das Regelventil (10) in der Absperrstellung ist in der der Durchfluss durch das Regelventil (10) unterbunden ist.

11. Regelventil (10) nach Anspruch 10, **dadurch gekennzeichnet, dass** das Impulsauswahlelement (15) eine Anzahl von Entlastungsausnehmungen (26) aufweist, wobei die Entlastungsausnehmungen (26) derart in der Oberfläche des Impulsauswahlelements (15) als Vertiefungen oder Kanäle für das Fluid ausgebildet sind, dass die erste Impulsleitung (12) und/oder die zweite Impulsleitung (13) über die Entlastungsausnehmungen (26) mit den Druckausgleichsbohrung (25) in verschiedenen Stellungen des Impulsauswahlelements (15) druck- und/oder fluidübertragend verbindbar sind.

## Claims

1. A control valve (10) for selectively controlling a fluid flow to a heat exchanger (30), in particular a heating element, a heating or cooling convector, or an underfloor or surface heating system, wherein the control valve (10) is designed as a 6-way ball valve, comprising:
- a first inlet (1) configured to be connected to a first fluid source;
- a second inlet (2) configured to be connected to a second fluid source;
- an outlet (3) configured to be connected to the heat exchanger (30);
- an inlet selection element (4), which is arranged downstream of the first and second inlets (1, 2) and upstream of the outlet (3), wherein the inlet selection element (4) is movable between a first position, in which the first inlet (1) is in fluid communication with the outlet (3), and a second position, in which the second inlet (2) is in fluid communication with the outlet (3);
- a return flow inlet (5) configured to be connected to the heat exchanger (30) to receive fluid flowing back from the heat exchanger (30);
- a first return flow outlet (6) configured to be connected to a first fluid outlet;
- a second return flow outlet (7) configured to be connected to a second fluid outlet; and
- an outlet selection element (8) arranged downstream of the return flow inlet (5) and upstream of the first and second return flow outlets (6, 7), wherein the outlet selection element (8) is movable between a first position, in which the first return flow outlet (6) is in fluid communication with the return flow inlet (5), and a second position, in which the second return flow outlet (7) is in fluid communication with the return flow inlet (5),
- wherein the inlet selection element (4) and/or the outlet selection element (8) are configured such that the flow through the control valve (10) to the outlet (3) and/or the return flow outlets (6, 7) can be controlled,
**characterized in that**
the control valve (10) comprises a differential pressure controller (9) that is arranged downstream of the return flow inlet (5) and upstream of the outlet selection element (8) in the flow direction.

2. The control valve (10) according to claim 1, **characterized in that** the inlet selection element (4) and the outlet selection element (8) are connected to one another and can be moved, in particular rotated, together by an actuator (11).

3. The control valve (10) according to any one of the preceding claims, **characterized in that** the control valve (10) comprises a first impulse line (12) in fluid communication with the first return flow outlet (6) and a second impulse line (13) in fluid communication with the second return flow outlet (7),
wherein the first impulse line (12) is in fluid communication with the differential pressure controller (9) when the outlet selection element (8) connects the return flow inlet (5) to the first return flow outlet (6) in such a way that a constant differential pressure across the outlet selection element (8) can be maintained, and
the second impulse line (13) is in fluid communication with the differential pressure controller (9) when the outlet selection element (8) connects the return flow inlet (5) to the second return flow outlet (7) in such a way that a constant differential pressure can be maintained across the outlet selection element (8).

4. The control valve (10) according to claim 3, **characterized in that** the control valve (10) comprises an impulse selection element (15) and a third impulse line (14), wherein the third impulse line is in fluid communication with the impulse selection element (14) and the differential pressure controller (9),
wherein the impulse selection element (15) is movable between a first position, which establishes a fluid connection between the first impulse line (12) and the third impulse line (14), and a second position that establishes a fluid connection between the second impulse line (13) and the third impulse line (14).

5. The control valve (10) according to claim 4, **characterized in that** the impulse selection element (15) and the outlet selection element (8) are connected to one another such that the impulse selection element (15) and the outlet selection element (8) move in unison.

6. The control valve (10) according to claim 5, **characterized in that** the impulse selection element (15) is substantially designed as a disc, or a plate, or a gyroscope and is rotatably mounted in a substantially cylindrical control cavity (16) of the control valve (10),
wherein the first impulse line (12), the second impulse line (13), and the third impulse line (14) are connected to the cylindrical control cavity (16) at different positions, in particular, at different radial positions, of the cylindrical control cavity (16), or open into it.

7. The control valve (10) according to claim 6, **characterized in that** the impulse selection element (15) has at least one arc-shaped impulse recess (17) that extends over a circular segment with the same radius of the impulse selection element (15), which is designed as a disc, plate, or gyroscope, wherein, upon rotation of the impulse selection element (15), the impulse recess (17) brings either the first impulse line (12) or the second impulse line (13) into fluid communication with the third impulse line (14).

8. The control valve (10) according to any one of the preceding claims, **characterized in that** the first impulse line (12) and/or the second impulse line (13) and/or the third impulse line (14) are formed within the housing of the control valve (10).

9. The control valve (10) according to any one of the preceding claims, **characterized in that** the control valve (10) comprises at least one diaphragm (20) arranged in the flow path, in particular in the transition region, between the inlet selection element (4) and/or the outlet selection element (8) and at least one of the fluid lines of the control valve (10), wherein the fluid lines each lead from the inlet selection element (4) and/or the outlet selection element (8) to the individual inlets (1, 2, 5) or outlets (3, 6, 7),
wherein the diaphragm (20) has a passage opening (22) through which the characteristics of the fluid flow, in particular the volumetric flow rate, can be modified by the control valve 10, wherein the passage opening (22) is designed such that the fluid flow exhibits a preferably linear flow characteristic as a function of the opening angle of the inlet selection element (4) and/or the outlet selection element (8).

10. The control valve (10) according to any one of the preceding claims, **characterized in that** the control valve (10) comprises at least one pressure-equalizing bore (25) that connects the control cavity (16) to the interior (27) of the housing in which the outlet selection element (8) is arranged, wherein the impulse selection element (15) is designed such that pressure equalization can occur between the return flow outlets (6, 7) via the first impulse line (12) and/or the second impulse line (13), the control cavity (16), and the pressure-equalizing bore (25) to the return flow inlet (5) when the control valve (10) is in the shut-off position, in which flow through the control valve (10) is prevented.

11. The control valve (10) according to claim 10, **characterized in that** the impulse selection element (15) has a number of relief recesses (26), wherein the relief recesses (26) are formed in the surface of the impulse selection element (15) as depressions or channels for the fluid in such a way that the first impulse line (12) and/or the second impulse line (13) can be connected to the pressure-equalizing bore (25) via the relief recesses (26) in various positions of the impulse selection element (15) in a manner that transmits pressure and/or fluid.

## Revendications

1. Vanne de régulation (10) pour la régulation sélective d'un débit de fluide vers un échangeur de chaleur (30), en particulier un corps de chauffage, un convecteur de chauffage ou de refroidissement ou un chauffage par le sol ou de surface, dans laquelle la vanne de régulation (10) est conçue en tant que robinet à boisseau sphérique à 6 voies, comprenant :
- une première entrée (1) qui est configurée pour être connectée à une première source de fluide ;
- une deuxième entrée (2) qui est configurée pour être connectée à une deuxième source de fluide ;
- une sortie (3) qui est configurée pour être connectée à l'échangeur de chaleur (30) ;
- un élément de sélection d'entrée (4) qui est disposé en aval des première et deuxième entrées (1, 2) et en amont de la sortie (3), dans laquelle l'élément de sélection d'entrée (4) est mobile entre une première position dans laquelle la première entrée (1) est en communication fluidique avec la sortie (3), et une deuxième position dans laquelle la deuxième entrée (2) est en communication fluidique avec la sortie (3) ;
- une entrée de reflux (5) qui est configurée pour être connectée à l'échangeur de chaleur (30) afin de recevoir un fluide revenant de l'échangeur de chaleur (30) ;
- une première sortie de reflux (6) qui est configurée pour être connectée à une première évacuation de fluide ;
- une deuxième sortie de reflux (7) qui est configurée pour être connectée à une deuxième évacuation de fluide ; et
- un élément de sélection de sortie (8) qui est disposé en aval de l'entrée de reflux (5) et en amont des première et deuxième sorties de reflux (6, 7), dans laquelle l'élément de sélection de sortie (8) est mobile entre une première position dans laquelle la première sortie de reflux (6) est en communication fluidique avec l'entrée de reflux (5), et une deuxième position dans laquelle la deuxième sortie de reflux (7) est en communication fluidique avec l'entrée de reflux (5),
- dans laquelle l'élément de sélection d'entrée (4) et/ou l'élément de sélection de sortie (8) sont conçus de sorte que le débit traversant la vanne de régulation (10) vers la sortie (3) et/ou vers les sorties de reflux (6, 7) peut être régulé,
**caractérisée en ce que**
la vanne de régulation (10) comprend un régulateur de pression différentielle (9) qui est disposé, dans le sens d'écoulement, en aval de l'entrée de reflux (5) et en amont de l'élément de sélection de sortie (8).

2. Vanne de régulation (10) selon la revendication 1, **caractérisée en ce que** l'élément de sélection d'entrée (4) et l'élément de sélection de sortie (8) sont connectés l'un à l'autre et peuvent être déplacés ensemble, en particulier en rotation, par un actionneur (11).

3. Vanne de régulation (10) selon l'une quelconque des revendications précédentes, **caractérisée en ce que** la vanne de régulation (10) présente une première conduite d'impulsion (12) en communication fluidique avec la première sortie de reflux (6) et une deuxième conduite d'impulsion (13) en communication fluidique avec la deuxième sortie de reflux (7),
dans laquelle la première conduite d'impulsion (12) est en communication fluidique avec le régulateur de pression différentielle (9) lorsque l'élément de sélection de sortie (8) connecte l'entrée de reflux (5) à la première sortie de reflux (6) de sorte qu'une pression différentielle constante puisse être maintenue à travers l'élément de sélection de sortie (8), et
la deuxième conduite d'impulsion (13) est en communication fluidique avec le régulateur de pression différentielle (9) lorsque l'élément de sélection de sortie (8) connecte l'entrée de reflux (5) à la deuxième sortie de reflux (7) de sorte qu'une pression différentielle constante puisse être maintenue à travers l'élément de sélection de sortie (8).

4. Vanne de régulation (10) selon la revendication 3, **caractérisée en ce que** la vanne de régulation (10) présente un élément de sélection d'impulsion (15) et une troisième conduite d'impulsion (14), dans laquelle la troisième conduite d'impulsion est en communication fluidique avec l'élément de sélection d'impulsion (14) et le régulateur de pression différentielle (9),
dans laquelle l'élément de sélection d'impulsion (15) est mobile entre une première position, qui établit une communication fluidique entre la première conduite d'impulsion (12) et la troisième conduite d'impulsion (14), et une deuxième position, qui établit une communication fluidique entre la deuxième conduite d'impulsion (13) et la troisième conduite d'impulsion (14).

5. Vanne de régulation (10) selon la revendication 4, **caractérisée en ce que** l'élément de sélection d'impulsion (15) et l'élément de sélection de sortie (8) sont connectés l'un à l'autre de sorte que l'élément de sélection d'impulsion (15) et l'élément de sélection de sortie (8) se déplacent en concordance.

6. Vanne de régulation (10) selon la revendication 5, **caractérisée en ce que** l'élément de sélection d'impulsion (15) est conçu sensiblement en tant que disque ou assiette ou en forme de toupie et disposé de manière rotative dans une cavité de régulation (16) sensiblement cylindrique de la vanne de régulation (10),
dans laquelle la première conduite d'impulsion (12), la deuxième conduite d'impulsion (13) et la troisième conduite d'impulsion (14) sont connectées à la cavité de régulation cylindrique (16) à différentes positions, en particulier à différentes positions radiales de la cavité de régulation cylindrique (16) ou débouchant dans celle-ci.

7. Vanne de régulation (10) selon la revendication 6, **caractérisée en ce que** l'élément de sélection d'impulsion (15) présente au moins un évidement d'impulsion (17) en forme d'arc qui s'étend sur un segment de cercle de même rayon de l'élément de sélection d'impulsion (15) conçu en tant que disque ou assiette ou en forme de toupie, dans laquelle l'évidement d'impulsion (17) met, lors de la rotation de l'élément de sélection d'impulsion (15), soit la première conduite d'impulsion (12), soit la deuxième conduite d'impulsion (13) en communication fluidique avec la troisième conduite d'impulsion (14).

8. Vanne de régulation (10) selon l'une quelconque des revendications précédentes, **caractérisée en ce que** la première conduite d'impulsion (12) et/ou la deuxième conduite d'impulsion (13) et/ou la troisième conduite d'impulsion (14) sont conçues dans le boîtier de la vanne de régulation (10).

9. Vanne de régulation (10) selon l'une quelconque des revendications précédentes, **caractérisée en ce que** la vanne de régulation (10) présente au moins un diaphragme (20) qui est disposé dans le trajet d'écoulement, en particulier dans la zone de transition, entre l'élément de sélection d'entrée (4) et/ou l'élément de sélection de sortie (8) et au moins une des conduites de fluide de la vanne de régulation (10), dans laquelle les conduites de fluide mènent respectivement de l'élément de sélection d'entrée (4) et/ou de l'élément de sélection de sortie (8) vers les différentes entrées (1, 2, 5) ou sorties (3, 6, 7),
dans laquelle le diaphragme (20) présente une ouverture de passage (22) grâce à laquelle la caractéristique du débit de fluide, en particulier le débit volumétrique, à travers la vanne de régulation (10) peut être modifiée, dans laquelle l'ouverture de passage (22) est conçue de sorte que le débit de fluide présente une caractéristique de débit de préférence linéaire en fonction de l'angle d'ouverture de l'élément de sélection d'entrée (4) et/ou de l'élément de sélection de sortie (8).

10. Vanne de régulation (10) selon l'une quelconque des revendications précédentes, **caractérisée en ce que** la vanne de régulation (10) présente au moins un alésage d'équilibrage de pression (25) qui connecte la cavité de régulation (16) à l'espace intérieur (27) du boîtier dans lequel l'élément de sélection de sortie (8) est disposé, dans laquelle l'élément de sélection d'impulsion (15) est conçu de sorte qu'un équilibrage de pression peut être réalisé entre les sorties de reflux (6, 7) via la première conduite d'impulsion (12) et/ou la deuxième conduite d'impulsion (13), la cavité de régulation (16) et l'alésage d'équilibrage de pression (25) vers l'entrée de reflux (5) lorsque la vanne de régulation (10) est dans la position de fermeture dans laquelle le débit à travers la vanne de régulation (10) est interrompu.

11. Vanne de régulation (10) selon la revendication 10, **caractérisée en ce que** l'élément de sélection d'impulsion (15) présente un certain nombre d'évidements de décharge (26), dans laquelle les évidements de décharge (26) sont conçus dans la surface de l'élément de sélection d'impulsion (15) sous forme de creux ou de canaux pour le fluide, de sorte que la première conduite d'impulsion (12) et/ou la deuxième conduite d'impulsion (13) puissent être connectées, via des évidements de décharge (26), à l'alésage d'équilibrage de pression (25) dans différentes positions de l'élément de sélection d'impulsion (15) par transmission de pression et/ou de fluide.
